# DEMANDE DE BREVET EUROPEEN

(11) **EP 1 116 910 A1**
(43) Date de publication de la demande: **18.07.2001**
(21) Numéro de dépôt: 01400097.0
(22) Date de dépôt: 15.01.2001
(51) Int. Cl.: F16L 9/12, F16L 11/08

(54) **Canalisation multicouche pour le transport de fluides chauds**

(30) Priorité: 17.01.2000 FR 0000520
(71) Demandeur: Hoezelock Tricoflex SA, 92500 Rueil Malmaison (FR)
(72) Inventeur: Leray, Fabrice, 51300 Maison en Champagne (FR); Maitay, Frédéric, 51300 Vitry le François (FR)
(74) Mandataire: Lavialle, Bruno

(57) **Abrégé**

La présente invention concerne une canalisation multicouche, comprenant :
- une couche interne (1) en polychlorure de vinyle souple à haut poids moléculaire,
- une couche de liaison (2) en polychlorure de vinyle souple à poids moléculaire moyen,
- une structure de renfort (3) à base de fibres (4) en matière plastique,
- une couche externe (5) en polychlorure de vinyle souple à poids moléculaire supérieur à celui de la couche de liaison (2).

L'invention a également pour objet un procédé de réalisation de cette canalisation.

## Description

La présente invention concerne une canalisation multicouche pour le transport de fluides chauds et en particulier pour le transport d'eau chaude.

Dans le domaine du transport d'eau chaude, on connaît des canalisations qui sont réalisées de manière classique en matériau thermoplastique comme le polychlorure de vinyle. Le polychlorure de vinyle utilisé est un polychlorure de vinyle standard ayant une valeur de K moyenne de l'ordre de 70. Ces canalisations sont parfaitement adaptées au transport d'eau dont la température n'excède pas 75°C et sont de qualité alimentaire et peuvent donc être utilisées pour le transport d'eau potable. Au-delà de cette température, la canalisation a tendance à se déformer et risque de se déchausser au niveau des raccords et/ou d'éclater. En outre, ces canalisations normalement souples ont tendance à se durcir après quelques utilisations à ces températures supérieures à 75°.

Pour le transport de fluides, et plus particulièrement d'eau, à des températures supérieures à 75°C, on a recours à des canalisations réalisées en matériau élastomère. Ce type de matériau présente cependant les inconvénients d'être relativement onéreux et le plus souvent de n'être pas de qualité alimentaire.

Or, l'eau circulant dans le réseau de distribution d'eau potable et dans les équipements qui y sont couramment raccordés a une température comprise entre 5°C et 100°C en continu mais qui peut s'élever jusqu'à 120°C en pointe et a une pression de service maximale d'environ 10 bars.

Une canalisation polyvalente devrait donc présenter des propriétés lui permettant de satisfaire à ces contraintes, être de qualité alimentaire et résister aux graisses dont la présence est fréquente dans l'environnement de ce type de canalisations. En outre, la canalisation devra être de faible coût.

Selon l'invention, on prévoit une canalisation multicouche, comprenant :
- une couche interne en polychlorure de vinyle souple à haut poids moléculaire,
- une couche de liaison en polychlorure de vinyle souple à poids moléculaire moyen,
- une structure de renfort à base de fibres en matière plastique,
- une couche externe en polychlorure de vinyle souple à poids moléculaire supérieur à celui de la couche de liaison.

D'autres caractéristiques et avantages de l'invention ressortiront à la lecture de la description qui suit d'un mode de réalisation particulier non limitatif de l'invention.

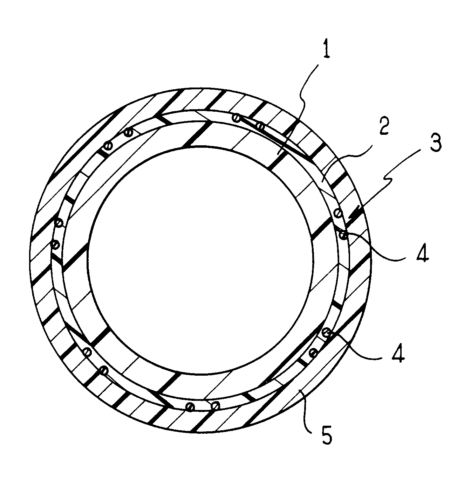

Il sera fait référence à la figure unique annexée représentant en coupe transversale une canalisation conforme à l'invention.

La canalisation multicouche conforme à l'invention comprend une couche interne 1 en PVC souple à haut poids moléculaire, une couche de liaison 2 en PVC souple de poids moléculaire moyen recouvrant extérieurement la couche interne 1, une structure de renfort généralement désignée en 3 à base de fibres 4 en matière plastique s'étendant sur la couche de liaison 2 et une couche externe 5 en polychlorure de vinyle souple de poids moléculaire supérieur à celui de la couche de liaison 2 qui recouvre la structure de renfort 3.

La couche interne 1 est réalisée à partir d'une résine de polychlorure de vinyle ayant une valeur de K de l'ordre de 100. Les chaînes moléculaires composant cette résine sont donc de relativement grande longueur, ce qui confère à la couche interne 1 une résistance relativement élevée à la température.

Pour une quantité pondérale de 100 de cette résine, sont adjointes :
- une quantité pondérale comprise sensiblement entre 5 et 15 de di-octyl-phtalate (tel que le produit référencé DOP de la société ELF ATOCHEM) qui est un lubrifiant facilitant l'extrusion ultérieure du matériau constituant la couche interne 1,
- une quantité pondérale comprise sensiblement entre 60 et 70 de trimellitates (par exemple de la marque URAPLAST 525 de la société DSM) qui est un agent plastifiant qui assouplit le matériau.

De manière optionnelle, il peut également être ajouté :
- entre 2,5 et 10 en poids d'huile de soja désodorisée (par exemple de la marque EDENOL D 82 de la société SIDOBRE SINNOVA),
- entre 0,5 et 5 en poids de stéarate de calcium ou de zinc (par exemple celui référencé CZ 11 de la société WITCO) exerçant une fonction lubrificatrice,
- jusqu'à 2 en poids d'un stabilisant tel que celui référencé CH55 de la société WITCO,
- jusqu'à 2 en poids d'un agent tensioactif (comme celui portant la marque PARALOÏD K125 de la société RHOM & HAAS) améliorant l'incorporation du plastifiant dans la résine,
- jusqu'à 2 en poids d'un pigment tel que le KRONOS 2220 de la société INDUSTRIE DU TITANE.

La couche de liaison 2 est réalisée à partir d'une résine de polychlorure de vinyle ayant une valeur de K de l'ordre de 70 qui est une valeur standard sur le marché.

De manière optionnelle, pour une quantité pondérale de 100 de résine, la couche de liaison 2 peut comprendre :
- une quantité en poids comprise sensiblement entre 50 et 60 de di-octyl-phalate,
- une quantité en poids comprise sensiblement entre 1 et 5 d'huile de soja désodorisée,
- une quantité en poids comprise sensiblement entre 0,5 et 5 de stéarate de calcium ou de zinc,
- jusqu'à 0,5 en poids d'un agent lubrifiant tel que celui référencé STAVINOR 8401 de la société CECA ATO.

La couche externe 5 est réalisée à partir d'une résine de polychlorure de vinyle ayant une valeur de K de l'ordre de 80. Il est également possible d'utiliser une résine de polychlorure de vinyle ayant soit une valeur de K comprise entre 70 et 80, soit une valeur de K supérieure à 80, par exemple égale à 100 comme la résine utilisée pour la couche interne 1.

Pour une quantité pondérale de 100 de résine, la couche externe 3 comprend :
- entre 11 et 26 en poids de di-octyl-phalate,
- entre 35 et 60 en poids d'un plastifiant polymère résistant aux graisses tel que celui référencé PLAXTER P20 ou P80 de la société COIM.

De manière optionnelle, la couche externe 3 peut comprendre :
- entre 2,5 et 10 en poids d'huile de soja désodorisée,
- entre 0,5 et 5 en poids de stéarate de calcium ou de zinc,
- jusqu'à 1 en poids d'un lubrifiant tel que le STAVINOR 8401 de la société CECA ATO et jusqu'à 2 en poids d'un lubrifiant tel que celui référencé LOXIOL G10 de la société SIDOBRE SINNOVA,
- jusqu'à 20 en poids d'une charge comme celle portant la marque BSH de la société OMYA,
- jusqu'à 2 en poids d'un pigment tel que celui portant la référence KRONOS 2220 de la société INDUSTRIE DU TITANE,
- jusqu'à 2 en poids d'un mélange maître tel que celui référencé 88892 de la société SNCI (un tel mélange maître comprend un colorant concentré sous forme de granulés).

La couche externe 5 ainsi constituée est particulièrement résistante aux graisses et assure une bonne protection de la canalisation.

Les fibres 4 de la structure de renfort 3 sont ici en polyester mais peuvent également être réalisées en polyamide ou en aramide.

Les constituants utilisés dans la composition de la canalisation ici décrite figurent dans la liste européenne de la résolution A96-5 autorisant ainsi l'utilisation de la canalisation dans des conditions de contacts brefs et répétés avec l'eau.

La canalisation est réalisée en extrudant conjointement la couche interne 1 et la couche de liaison 2 puis en tressant les fibres 4 autour de la couche de liaison 2 de manière que la structure de renfort 3 recouvre celle-ci. La structure de renfort 3 est par exemple réalisée par guipage des fibres 4 selon un angle sensiblement égal à 50° et ici de 50,4° qui est l'angle dit neutre pour lequel les déformations d'allongement et d'expansion radiale s'équilibrent et se compensent.

La canalisation est ensuite soumise à un rayonnement infrarouge déterminé pour obtenir une fusion superficielle de la couche de liaison 2. D'autres moyens de chauffage peuvent être utilisés.

Le matériau de la couche externe 5 sensiblement à l'état liquide est ensuite disposé par coextrusion sur la structure de renfort 3 et la couche de liaison 2 au travers des mailles de la structure de renfort 3. Le nombre de fibres, le diamètre de celles-ci, et la taille des mailles réalisées sont déterminés de manière à permettre une adhésion suffisante de la couche de liaison et de la couche externe au travers de la structure de renfort tout en assurant la résistance à l'éclatement attendue.

Ainsi, une très forte adhérence de la couche de liaison 2 et de la couche externe 3 est obtenue, ce qui permet un maintien en position particulièrement efficace des fibres 4 constituant la structure de renfort 3. Ceci permet d'éviter un espacement localisé de portions de fibres les unes par rapport aux autres qui risqueraient de conduire au perçage de la canalisation. Ceci confère en outre à la canalisation une tenue au vieillissement importante.

Sur la canalisation ici décrite, l'épaisseur de la couche interne 1 est de préférence comprise entre 0,5 et 3 mm, celle de la couche de liaison 2 entre 0,3 et 1 mm et celle de la couche externe 5 entre 0,7 et 2 mm. La couche interne 1 a une dureté shore A comprise sensiblement entre 70 et 85 et la couche externe 5 a une dureté shore A comprise sensiblement entre 60 et 86.

Bien entendu, l'invention n'est pas limitée au mode de réalisation décrit et on peut y apporter des variantes de réalisation sans sortir du cadre de l'invention tel que défini par les revendications.

En particulier, les différentes valeurs numériques qui ont été mentionnées représentent un compromis optimal pour l'obtention d'une canalisation souple, ayant une résistance mécanique élevée et une bonne résistance à la température. Ces différentes valeurs peuvent toutefois être modifiées pour adapter la structure de la canalisation à des conditions particulières d'utilisation ou en fonction du diamètre de celle-ci.

## Revendications

1. Canalisation multicouche, caractérisée en ce qu'elle comprend :
- une couche interne (1) en polychlorure de vinyle souple à haut poids moléculaire,
- une couche de liaison (2) en polychlorure de vinyle souple à poids moléculaire moyen,
- une structure de renfort (3) à base de fibres (4) en matière plastique,
- une couche externe (5) en polychlorure de vinyle souple à poids moléculaire supérieur à celui de la couche de liaison (2).

2. Canalisation multicouche selon la revendication 1, caractérisée en ce que la couche interne (1) est réalisée à partir d'une résine de polychlorure de vinyle ayant une valeur de K de l'ordre de 100.

3. Canalisation multicouche selon la revendication 2, caractérisée en ce que, pour une quantité en poids de 100 de résine de polychlorure de vinyle, la couche interne (1) comprend :
- une quantité de di-octyl-phatlate comprise sensiblement entre 5 et 15,
- une quantité de trimellitate comprise sensiblement entre 60 et 70.

4. Canalisation multicouche selon la revendication 2 ou la revendication 3, caractérisée en ce que la couche de liaison (2) est réalisée à base d'une résine de polychlorure de vinyle ayant une valeur de K de l'ordre de 70.

5. Canalisation multicouche selon l'une quelconque des revendications 2 à 4, caractérisée en ce que la couche externe (5) est réalisée à partir d'une résine de polychlorure de vinyle ayant une valeur de K au moins égale à 80.

6. Canalisation multicouche selon la revendication 5, caractérisée en ce que, pour une quantité en poids de 100 de résine de polychlorure de vinyle, la couche externe (5) comprend :
- une quantité de di-octyl-phtalate comprise sensiblement entre 11 et 26,
- et une quantité d'un agent plastifiant comprise sensiblement entre 35 et 60.

7. Canalisation multicouche selon l'une quelconque des revendications précédentes, caractérisée en ce que la couche interne (1) a une épaisseur sensiblement comprise entre 0,5mm et 3 mm, la couche de liaison (2) a une épaisseur sensiblement comprise entre 0,3 mm et 1 mm, la couche externe (5) a une épaisseur sensiblement comprise entre 0,7 mm et 2 mm.

8. Canalisation multicouche selon l'une quelconque des revendications 2 à 7, caractérisée en ce que la couche interne (1) a une dureté shore A comprise entre 70 et 85 et la couche externe (5) a une dureté shore A comprise entre 60 et 86.

9. Canalisation multicouche selon l'une quelconque des revendications précédentes, caractérisée en ce que les fibres (4) sont issues d'un groupe comprenant le polyester, le polyamide, l'aramide.

10. Canalisation multicouche selon l'une quelconque des revendications précédentes, caractérisée en ce que les fibres (4) sont agencées selon un angle de guipage sensiblement égal à 50°.

11. Procédé de réalisation d'une canalisation multicouche selon l'une quelconque des revendications précédentes, caractérisé en ce qu'il comprend les étapes de:
- extruder conjointement la couche interne (1) et la couche de liaison (2),
- recouvrir la couche de liaison (2) avec la structure de renfort (3),
- fondre superficiellement la couche de liaison (2),
- recouvrir la structure de renfort (3) et la couche de liaison (2) avec la couche externe (5).

12. Procédé selon la revendication 11, caractérisé en ce que la fusion de la couche de liaison (2) est réalisée par chauffage au moyen d'un rayonnement infrarouge.
